# EUROPEAN PATENT APPLICATION

(11) **EP 4 236 494 A1**
(43) Date of publication of application: **30.08.2023**
(21) Application number: 21883273.1
(22) Date of filing: 21.10.2021
(51) Int. Cl.: H04W 56/00, H04W 74/00, H04W 74/08, H04W 84/06

(54) **METHOD AND APPARATUS FOR TRANSMITTING AND RECEIVING SIGNALS IN WIRELESS COMMUNICATION SYSTEM**

(30) Priority: 21.10.2020 KR 20200137069; 06.04.2021 US 202163171561 P; 19.08.2021 KR 20210109696
(71) Applicant: LG Electronics Inc., Yeongdeungpo-gu Seoul, 07336 (KR)
(72) Inventor: SHIN, Seokmin, Seoul 06772 (KR); PARK, Haewook, Seoul 06772 (KR); KIM, Kijun, Seoul 06772 (KR); KO, Hyunsoo, Seoul 06772 (KR)
(74) Representative: Plasseraud IP
(86) International application number: PCT/KR2021/014790
(87) International publication number: WO 2022/086205

(57) **Abstract**

In a method and apparatus for transmitting and receiving signals in a wireless communication system, according to an embodiment of the present invention, the method comprises the steps of: receiving information about a common TA value; and communicating with a base station on the basis of the common TA value. The information about the common TA value may include information about the location of a reference point on a feeder link, and the common TA value may be a TA value applied between a satellite and the reference point.

## Description

### TECHNICAL FIELD

The present disclosure relates to a method and apparatus for use in a wireless communication system.

### BACKGROUND ART

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

One technical aspect of the present disclosure is to provide a method and apparatus for transmitting and receiving signals to efficiently perform a signal transmitting and receiving process in a wireless communication system supportive of NT`N.

Technical tasks of the present disclosure are not limited to the above-described technical task, and other technical tasks may be inferred from the embodiments of the present disclosure.

### Technical Solution

The present disclosure provides a method of transmitting and receiving signals in a wireless communication system and apparatus therefor.

According to an aspect of the present disclosure, provided herein is a method of transmitting and receiving a signal by a user equipment (UE) supporting a non-terrestrial network (NTN) in a wireless communication system, including receiving information about a common timing advance (TA) value; and communicating with a base station (BS) based on the common TA value. The information about the common TA value includes information about a location of a reference point on a feeder link, and the common TA value is a TA value applied between a satellite and the reference point.

In another aspect of the present disclosure, provided herein is a method of transmitting and receiving a signal by a base station (BS) supporting a non-terrestrial network (NTN) in a wireless communication system, including transmitting information about a common timing advance (TA) value; and communicating with a user equipment (UE) based on the common TA value. The information about the common TA value includes information about a location of a reference point on a feeder link, and the common TA value is a TA value applied between a satellite and the reference point.

In another aspect of the present disclosure, provided herein are an apparatus, a processor, and a storage medium for performing the method of transmitting and receiving a signal.

Each of the above communication devices may include an autonomous driving vehicle configured to communicate at least with a terminal, a network, and another autonomous driving vehicle other than the communication device.

The aspects of the present disclosure described above are only some of the preferred embodiments of the present disclosure, and various embodiments reflecting the technical features of the present disclosure may be derived and understood by those skilled in the art, to which the present disclosure pertains, based on the detailed description of the present disclosure described below.

### Advantageous Effects

According to one embodiment of the present disclosure, when signal transmission/reception is performed in a wireless communication system supporting NTN, signal transmission/reception may be performed more efficiently through an operation differentiated from the related art.

Technical effects of the present disclosure are not limited to the above-described technical effect, and other technical effects may be inferred from the embodiments of the present disclosure.

### Brief Description of Drawings

FIG. 1 illustrates a radio frame structure.
FIG. 2 illustrates a resource grid during the duration of a slot.
FIG. 3 illustrates a self-contained slot structure.
FIG. 4 illustrates an acknowledgment/negative acknowledgment (ACK/NACK) transmission process.
FIG. 5 illustrates an exemplary PUSCH transmission process.
FIG. 6 shows an example of a wireless communication system for supporting an NTN.
FIGS. 7 and 8 show a random access process.
FIGS. 9 to 14 are diagrams for explaining an NTN system and a random access process according to an embodiment of the present disclosure.
FIGS. 15 to 18 show an example of apparatuses according to an embodiment of the present disclosure.

### BEST MODE

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

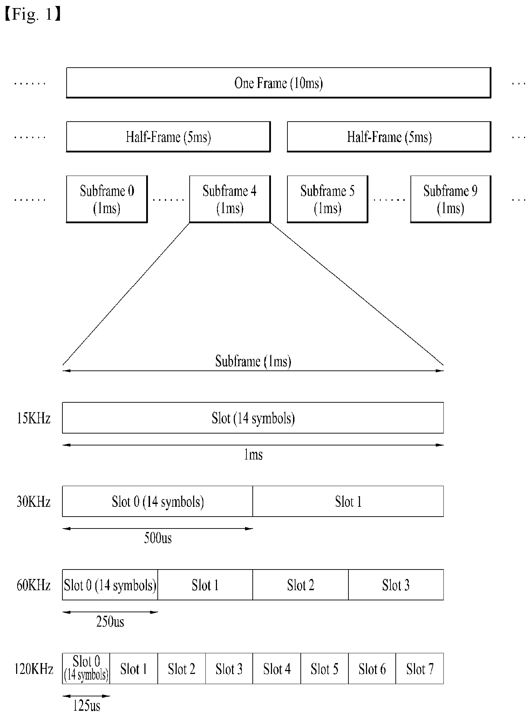

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15^{∗}2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| ^{∗} N^{slot}_{symb}: number of symbols in a slot ^{∗} N^{frame,u}ₛₗₒₜ: number of slots in a frame ^{∗} N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15∗2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15kHz, a wide area in traditional cellular bands may be supported, while with an SCS of 30kHz or 60kHz, a dense urban area, a lower latency, and a wide carrier bandwidth may be supported. With an SCS of 60kHz or higher, a bandwidth larger than 24.25kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 2 42 5 0MHz - 52600MHz | 60, 120, 240kHz |

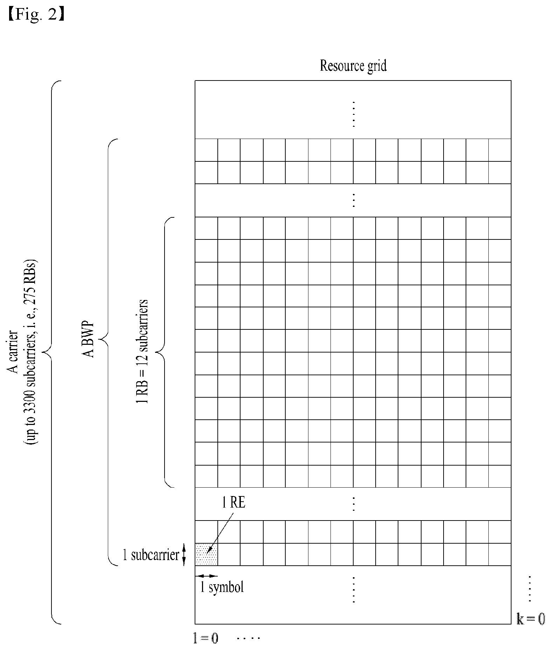

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a LTE receives information from a BS in downlink (DL), and the LTE transmits information to the BS in uplink (LTL). The information exchanged between the BS and LTE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The LTL RS includes a DM-RS, a PT-RS, and a sounding reference signal (SRS).

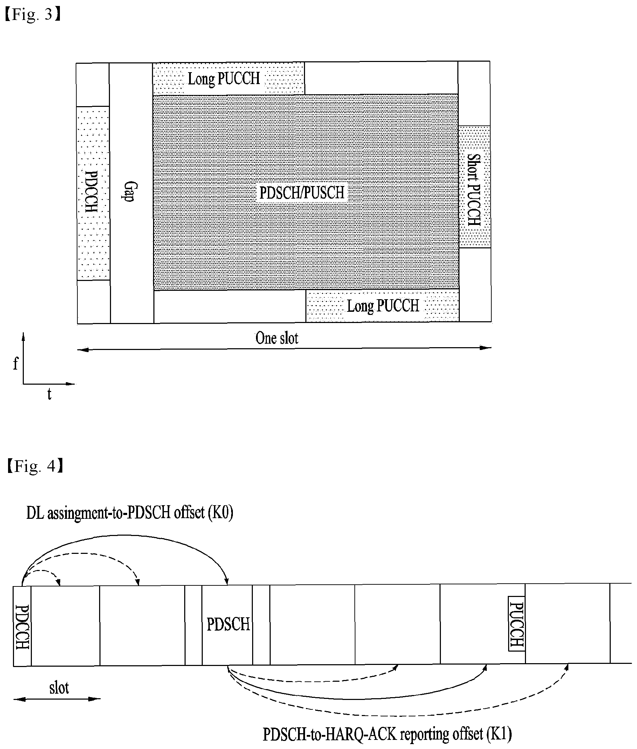

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a LTL control channel. N and M are integers greater than or equal to 0. A resource region (hereinafter, a data region) that is between the DL control region and the LTL control region may be used for DL data transmission or LTL data transmission. For example, the following configuration may be considered. Respective sections are listed in a temporal order.

In the present disclosure, a base station (BS) may be, for example, a gNode B (gNB).

FIG. 4 illustrates an ACK/NACK transmission process. Referring to FIG. 4, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.
- Frequency domain resource assignment: Indicates an RB set assigned to a PDSCH.
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.

After receiving a PDSCH in slot #(n+K0) according to the scheduling information of slot #n, the UE may transmit UCI on a PUCCH in slot #(n+K1). The UCI includes an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

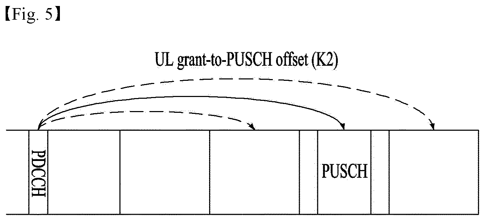

FIG. 5 illustrates an exemplary PUSCH transmission process. Referring to FIG. 5, the UE may detect a PDCCH in slot #n. The PDCCH may include UL scheduling information (e.g., DCI format 0_0 or DCI format 0_1). DCI format 0_0 and DCI format 0_1 may include the following information.
- Frequency domain resource assignment: Indicates an RB set allocated to a PUSCH.
- Time domain resource assignment: Specifies a slot offset K2 indicating the starting position (e.g., symbol index) and length (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### 1. Wireless communication system for supporting Non-Terrestrial Network (NTN)

Non-Terrestrial Network (NTN) refers to a network or a network segment, which is configured to use a radio resource in a satellite or an Unmanned Aircraft System (UAS) platform.

In order to ensure a wider coverage or to provide a wireless communication service in a place in which it is not easy to install a wireless communication BS, use of a non-terrestrial network (NR NTN) or LTE NTN service has been considered. An NR or LTE service as an existing terrestrial network (TN) service provides a wireless communication service to LTEs by installing a corresponding BS on the ground, but the NTN service provides a wireless communication service to UEs by installing a BS at places on the ground, where an artificial satellite (a geostationary earth orbit, a low-earth orbit, a medium-earth orbit, etc.), an airplanes, an unmanned plane, a drone, or the like is not positioned rather than installing the BS on the ground.

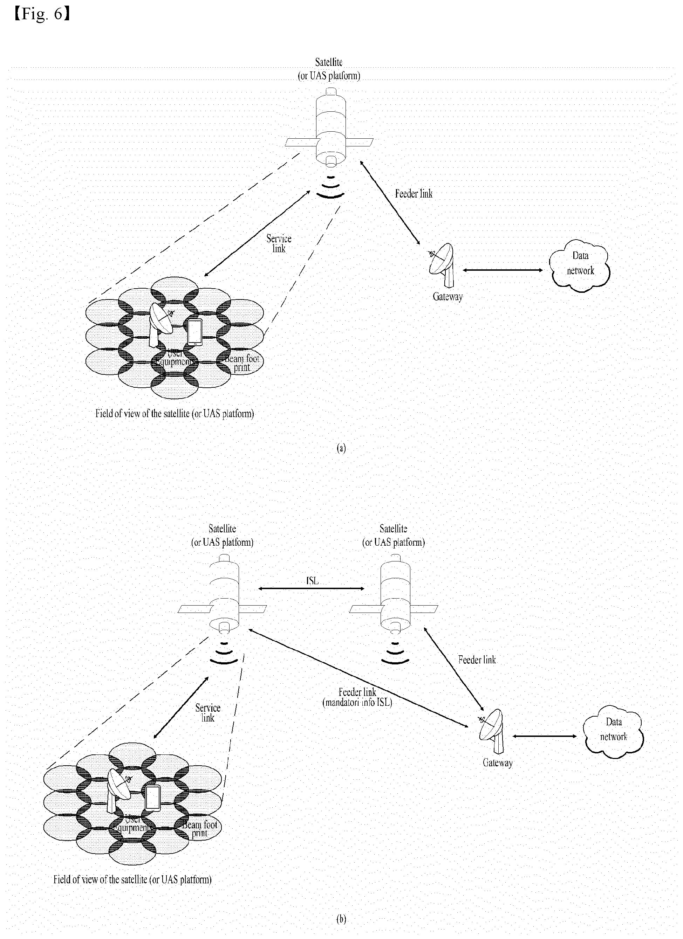

FIG. 6 shows examples of scenarios of NTN that a UE is capable of accessing. FIG. 6(a) shows an example of an NTN scenario based on a transparent payload, and FIG. 6(b) shows an example of an NTN scenario based on a regenerative payload.

The NTN may be usually characterized by the following factors.
- One or more sat-gateways for connecting the NTN to a common data network:

A Geostationary Earth Orbiting (GEO) satellite may be provided from one or more sat-gateways disposed in a coverage (e.g., regional or even continental coverage) targeted by a satellite. UEs within a cell may be assumed to be served by only one sat-gateway;

A non-GEO satellite may be successively served by one or more gat-gateways. A system may ensure a service and feeder link continuity between serving sat-gateways for a time period sufficient to proceed with mobility anchoring and handover.
- Feeder link or wireless link between sat-gateway and satellite (or UAS platform)
- Service link or wireless link between LTE and satellite (or UAS platform)
- Satellite (or UAS platform) for implementing one of transparent or regenerative (including onboard processing) payload. Satellite (or UAS platform) may generally generate multiple beams in a service area with a boundary defined by a field of view of the satellite (or UAS platform). The footprint of the beam may be generally elliptical. The field of view of the satellite (or UAS platform) may be determined according to an onboard antenna diagram and the minimum elevation angle.

Transparent payload: Radio frequency filtering, and frequency conversion and amplification. Thus, a waveform signal repeated by a payload is not changed.

Regenerative payload: Demodulation/decoding, switching and/or routing, coding/modulation as well as radio frequency filtering and frequency conversion and amplification. This is practically equivalent to having all or some of functions of a BS (e.g., gNB) on a satellite (or UAS platform).
- Inter-satellite links (ISL) in the case of a satellite group. To this end, the satellite requires a regeneration payload. The ISLs may operate at an RF frequency or a wide band.
- A UE may be served by a satellite (or UAS platform) within a target service area.

Table 4 below shows an example of types of a satellite (or UAS platform).

**[Table 4]**

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

Generally,
- The GEO satellite and the UAS may be used to provide a continental, regional, or local service.
- A Low Earth Orbiting (LEO) and Medium Earth Orbiting (MEO) group may be used to provide a service in both the Northern and Southern Hemispheres. In some cases, constellation may also provide global coverage including a polar region. For later, an appropriate orbital inclination, sufficient generated beams, and inter-satellite links may be required.

A Highly Elliptical Orbiting (HEO) satellite system may also be considered.

Hereinafter, a wireless communication system in an NTN including the following six reference scenarios will be described.
- Circuit orbit and nominal station keeping platform
- Highest Round Trip Delay (RTD) constraint
- Highest Doppler constraint
- Transparent or regenerative payload
- One case with ISL and one case without ISL. In the case of inter-satellite link, a regenerative payload may be required.
- Fixed or steerable beams causing a moving or fixed footprint on the ground.

Six reference scenarios are considered in Tables 5 and 6.

**[Table 5]**

| | Transparent satellite | Regenerative satellite |
|---|---|---|
| GEO based non-terrestrial access network | Scenario A | Scenario B |
| LEO based non-terrestrial access network: steerable beams | Scenario C1 | Scenario D1 |
| LEO based non-terrestrial access network: the beams move with the satellite | Scenario C2 | Scenario D2 |

**[Table 6]**

| | | |
|---|---|---|
| Scenarios | GEO based non-terrestrial access network (Scenario A and B) | LEO based non-terrestrial access network (Scenario C & D) |
| Orbit type | notional station keeping position fixed in terms of elevation/azimuth with respect to a given earth point | circular orbiting around the earth |
| Altitude | 35,786 km | 600 km |
| | | 1,200 km |
| Spectrum (service link) | <6 GHz (e.g. 2 GHz) | |
| | >6 GHz (e.g. DL 20 GHz, UL 30 GHz) | |
| Max channel bandwidth capability (service link) | 30 MHz for band < 6 GHz | |
| | 1 GHz for band > 6 GHz | |
| Payload | Scenario A : Transparent (including radio frequency function only) | Scenario C: Transparent (including radio frequency function only) |
| | Scenario B: regenerative (including all or part of RAN functions) | Scenario D: Regenerative (including all or part of RAN functions) |
| Inter-Satellite link | No | Scenario C: No |
| | | Scenario D: Yes/No (Both cases are possible.) |
| Earth-fixed beams | Yes | Scenario C1: Yes (steerable beams), see note 1 |
| | | Scenario C2: No (the beams move with the satellite) |
| | | Scenario D 1: Yes (steerable beams), see note 1 |
| | | Scenario D 2: No (the beams move with the satellite) |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and 10° for feeder link |
| Max distance between satellite and user equipment at min elevation angle | 40,581 km | 1,932 km (600 km altitude) |
| | | 3,131 km (1,200 km altitude) |
| Max Round Trip Delay (propagation delay only) | Scenario A: 541.46 ms (service and feeder links) | Scenario C: (transparent payload: service and feeder links) |
| | | - 25.77 ms (600km) |
| | | - 41.77 ms (1200km) |
| | Scenario B: 270.73 ms (service link only) | Scenario D: (regenerative payload: service link only) |
| | | - 12.89 ms (600km) |
| | | - 20.89 ms (1200km) |
| Max differential delay within a cell (Note 6) | 10.3 ms | 3.12 ms and 3.18 ms for respectively 600km and 1200km |
| Max Doppler shift (earth fixed user equipment) | 0.93 ppm | 24 ppm (600km) |
| | | 21ppm(1200km) |
| Max Doppler shift variation (earth fixed user equipment) | 0.000 045 ppm/s | 0.27ppm/s (600km) |
| | | 0.13ppm/s(1200km) |
| User equipment motion on the earth | 1200 km/h (e.g. aircraft) | 500 km/h (e.g. high speed train) |
| | | Possibly 1200 km/h (e.g. aircraft) |
| User equipment antenna types | Omnidirectional antenna (linear polarisation), assuming 0 dBi | |
| | Directive antenna (up to 60 cm equivalent aperture diameter in circular polarisation) | |
| User equipment Tx power | Omnidirectional antenna: LTE power class 3 with up to 200 mW | |
| | Directive antenna: up to 20 W | |
| User equipment Noise figure | Omnidirectional antenna: 7 dB | |
| | Directive antenna: 1.2 dB | |
| Service link | 3GPP defined New Radio | |
| Feeder link | 3GPP or non-3GPP defined Radio interface | 3GPP or non-3GPP defined Radio interface |

Reference 1: Each satellite may steer a beam to a fixed point on the Earth by using beamforming technology. This may be applied for a time corresponding to visibility of the satellite.

Reference 2: The max delay variation in the beam (UE fixed on the ground) may be calculated based on the minimum elevation angle (Min Elevation angle) for both the gateway and the UE.

Reference 3: The maximum differential delay in the beam may be calculated based on a diameter of the maximum beam footprint at the lowest point (at nadir).

Reference 4: The speed of light used to calculate the delay may be 299,792,458 m/s.

Reference 5: The size of the maximum beam footprint of the GEO may be determined based on GEO High Throughput system technology of the current state under the assumption that there is a spot beam at a coverage edge (low altitude).

Reference 6: The maximum differential delay at a cell level may be calculated in consideration at a beam level delay for the largest beam size. When the size of the beam is small or medium, the cell may include two or more beams. However, the cumulative differential delay of all beams in the cell may not exceed the maximum differential delay at a cell level in Table 10.

The NTN-related description of the present specification may be applied to an NTN GEO scenario and any non-geostationary orbit (NGSO) scenario having a circuit orbit with an altitude equal to or greater than 600 km.

### 2. Random Access Procedure

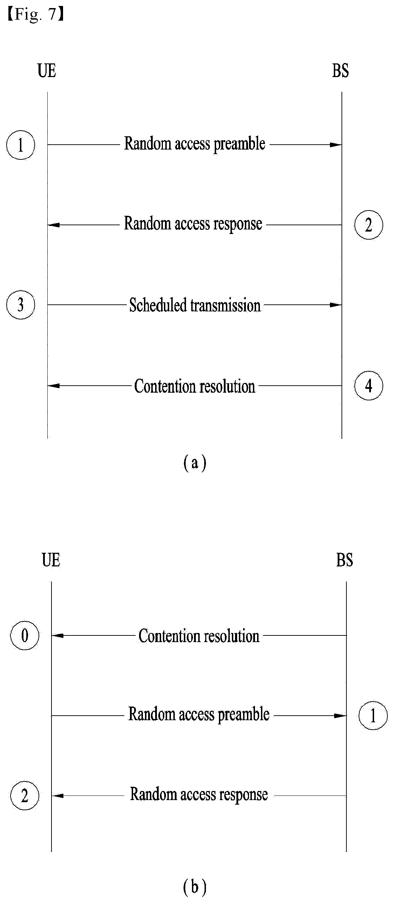

FIG. 7 illustrates random access procedures. FIG. 7(a) illustrates the contention-based random access procedure, and FIG. 7(b) illustrates the dedicated random access procedure.

Referring to FIG. 7(a), the contention-based random access procedure includes the following four steps. The messages transmitted in steps 1 to 4 may be referred to as message 1 (Msg1) to message 4 (Msg4), respectively.
- Step 1: The LTE transmits an RACH preamble on a PRACH.
- Step 2: The UE receives a random access response (RAR) on a DL-SCH from the BS.
- Step 3: The UE transmits a Layer 2 (L2)/Layer 3 (L3) message on a UL-SCH to the BS.
- Step 4: The UE receives a contention resolution message on the DL-SCH from the BS.

The UE may receive random access information in system information from the BS.

When the UE needs random access, the UE transmits an RACH preamble to the BS as in step 1. The BS may identify each RACH preamble by a time/frequency resource (RACH occasion (RO)) in which the RACH preamble is transmitted, and a preamble index (PI).

Upon receipt of the RACH preamble from the UE, the BS transmits an RAR message to the LTE as in step 2. To receive the RAR message, the LTE monitors an L1/L2 PDCCH with a cyclic redundancy check (CRC) masked with a random access-RNTI (RA-RNTI), including scheduling information for the RAR message, within a preconfigured time window (e.g., ra-ResponseWindow). The PDCCH masked with the RA-RNTI may be transmitted only in a common search space. When receiving a scheduling signal masked with the RA-RNTI, the UE may receive an RAR message on a PDSCH indicated by the scheduling information. The UE then checks whether there is RAR information directed to the UE in the RAR message. The presence or absence of the RAR information directed to the UE may be determined by checking whether there is a random access preamble ID (RAPID) for the preamble transmitted by the UE. The index of the preamble transmitted by the UE may be identical to the RAPID. The RAR information includes the index of the corresponding RACH preamble, timing offset information (e.g., timing advance command (TAC)) for UL synchronization, UL scheduling information (e.g., LTL grant) for Msg3 transmission, and LTE temporary identification information (e.g., temporary-C-RNTI (TC-RNTI)).

Upon receipt of the RAR information, the LTE transmits LTL-SCH data (Msg3) on a PUSCH according to the UL scheduling information and the timing offset value, as in step 3. Msg3 may include the ID (or global ID) of the UE. Alternatively, Msg3 may include RRC connection request-related information (e.g., RRCSetupRequest message) for initial access. In addition, Msg3 may include a buffer status report (BSR) on the amount of data available for transmission at the UE.

After receiving the UL-SCH data, the BS transmits a contention resolution message (Msg4) to the UE as in step 4. When the UE receives the contention resolution message and succeeds in contention resolution, the TC-RNTI is changed to a C-RNTI. Msg4 may include the ID of the UE and/or RRC connection-related information (e.g., an RRCSetup message). When information transmitted in Msg3 does not match information received in Msg4, or when the UE has not received Msg4 for a predetermined time, the UE may retransmit Msg3, determining that the contention resolution has failed.

Referring to FIG. 7(b), the dedicated random access procedure includes the following three steps. Messages transmitted in steps 0 to 2 may be referred to as Msg0 to Msg2, respectively. The BS may trigger the dedicated random access procedure by a PDCCH serving the purpose of commanding RACH preamble transmission (hereinafter, referred to as a PDCCH order).
- Step 0: The BS allocates an RACH preamble to the UE by dedicated signaling.
- Step 1: The LTE transmits the RACH preamble on a PRACH.
- Step 2: The UE receives an RAR on a DL-SCH from the BS.

Steps 1 and 2 of the dedicated random access procedure may be the same as steps 1 and 2 of the contention-based random access procedure.

In NR, DCI format 1_0 is used to initiate a non-contention-based random access procedure by a PDCCH order. DCI format 1_0 is used to schedule a PDSCH in one DL cell. When the CRC of DCI format 1_0 is scrambled with a C-RNTI, and all bits of a "Frequency domain resource assignment" field are 1s, DCI format 1_0 is used as a PDCCH order indicating a random access procedure. In this case, the fields of DCI format 1_0 are configured as follows.
- RA preamble index: 6 bits
- UL/supplementary UL (SUL) indicator: 1 bit. When the bits of the RA preamble index are all non-zeroes and SLTL is configured for the LTE in the cell, the LTL/SLTL indicator indicates a UL carrier in which a PRACH is transmitted in the cell. Otherwise, it is reserved.
- SSB (Synchronization Signal/Physical Broadcast Channel) index: 6 bits. When the bits of the RA preamble index are all non-zeroes, the SSB indicator indicates an SSB used to determine an RACH occasion for PRACH transmission. Otherwise, it is reserved.
- PRACH mask index: 4 bits. When the bits of the RA preamble index are all non-zeroes, the PRACH mask index indicates an RACH occasion associated with the SSB indicated by the SSB index. Otherwise, it is reserved.
- Reserved: 10 bits

When DCI format 1_0 does not correspond to a PDCCH order, DCI format 1_0 includes fields used to schedule a PDSCH (e.g., a time domain resource assignment, a modulation and coding scheme (MCS), an HARQ process number, a PDSCH-to-HARQ_feedback timing indicator, and so on).

### 2-step random access procedure

In the prior art, random access is performed by a 4-step procedure as described above. In the legacy LTE system, an average of 15.5 ms is required for the 4-step random access procedure.

**[Table 7]**

| ▪ **Component** | | **Description** | **Time (ms)** |
|---|---|---|---|
| ▪ | 1 | Average delay due to RACH scheduling period (1ms RACH cycle) | 0.5 |
| ▪ | 2 | RACH Preamble | 1 |
| ▪ | 3-4 | Preamble detection and transmission of RA response (Time between the end RACH transmission and UE's reception of scheduling grant and timing adjustment) | 3 |
| ▪ | 5 | Ut Processing delay (decoding of scheduling grant, timing alignment and C-RNTI assignment + L1 encoding of RRC Connection Request) | 5 |
| ▪ | 6 | Transmission of RRC and NAS Request | 1 |
| ▪ | 7 | Processing delay in eNB (L2 and RRC) | 4 |
| ▪ | 8 | Transmission of RRC Connection Set-up (and UL grant) | 1 |

The NR system may require lower latency than conventional systems. When random access occurs in a U-band, the random access may be terminated, that is, contention may be resolved only if the LTE and BS sequentially succeed in LBT in all steps of the 4-step random access procedure. If the LBT fails even in one step of the 4-step random access procedure, resource efficiency may decrease, and latency may increase. If the LBT fails in a scheduling/transmission process associated with Msg2 or Msg3, the resource efficiency may significantly decrease, and the latency may significantly increase. For random access in an L-band, low latency may be required in various scenarios of the NR system. Therefore, a 2-step random access procedure may be performed in the L-band as well.

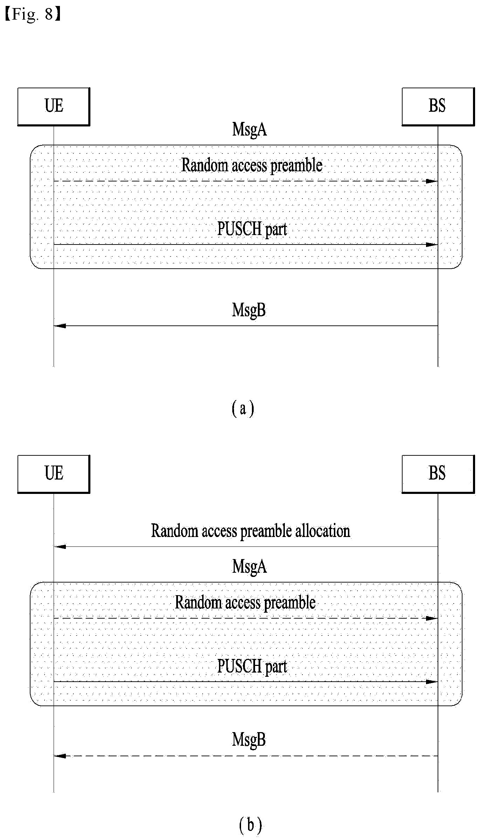

As illustrated in FIG. 8(a), the 2-step random access procedure may include two steps: transmission of a LTL signal (referred to as MsgA) from the LTE to the BS and transmission of a DL signal (referred to as MsgB) from the BS to the UE.

The following description focuses on the initial access procedure, but the proposed methods may be equally applied to the random access procedure after the UE and BS establish an RRC connection. Further, a random access preamble and a PUSCH part may be transmitted together in a non-contention random access procedure as shown in FIG. 8(b).

While not shown, the BS may transmit a PDCCH for scheduling MsgB to the UE, which may be referred to as a MsgB PDCCH.

### 3. TA (Timing Advance) in NTN

The contents (NR frame structure, NTN system, etc.) described above may be applied in combination with methods proposed in the present specification described later, or may be supplemented in clarifying the technical features of the methods proposed in the present specification.

In addition, the methods described later are related to UpLink (LTL) transmission and can be equally applied to a DownLink (DL) signal transmitting method in the NR or LTE system described above, and the technical ideas proposed in the present specification can be modified or substituted to fit the terms, expressions, structures, etc. defined in each system so as to be implemented in the corresponding system.

The frequency bands considered for NR NTN services are mainly 2 GHz band (S-band: 2 ~4 GHz) in the 6 GHz or lower band, and DL 20 GHz and UL 30 GHz band (Ka-Band: 26.5 ~ 40 GHz) in the 6 GHz or higher band,.

Table 6 discloses the maximum Round Trip Delay for each scenario.

As described above, the NR NTN service is largely categorized into two schemes.

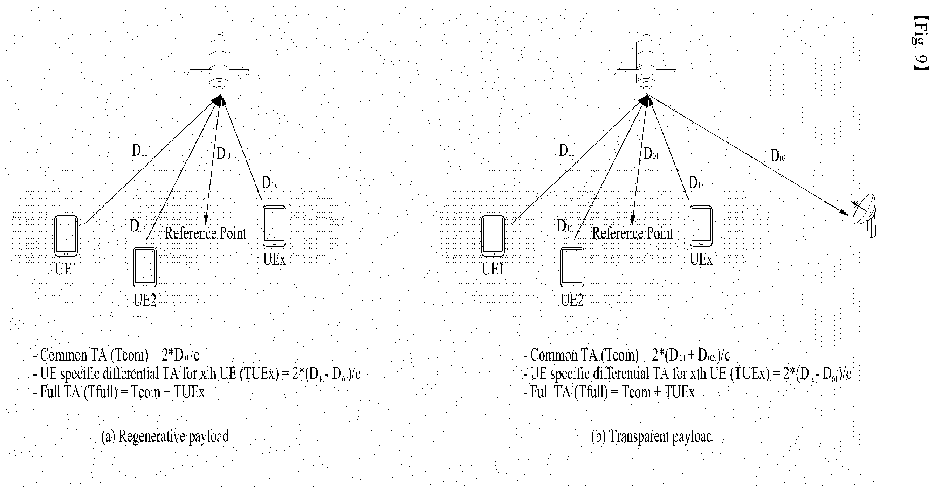

FIG. 9 (a) illustrates a regenerative payload scheme. FIG. 9 (b) illustrates a transparent payload scheme. The regenerative payload scheme is a scheme in which a satellite itself can serve as a base station. The transparent payload scheme is a scheme in which a satellite receives a payload from a base station on the ground and transmits the corresponding signal to a UE.

### 3.1. Method of configuring RACH occasions (ROs) with different initial TA values

When the LTE transmits a LTL signal and/or channel (e.g., a PRACH) based on a TA value obtained autonomously, the BS is incapable of being accurately aware of the TA value obtained by the UE. The BS needs to be aware of a UL/DL timing relationship of the UE to indicate an accurate timing during scheduling of UL/DL control and/or data information. Therefore, the BS needs to be aware of the TA value obtained autonomously by the UE.

The TA value obtained autonomously by the UE may be reported to the BS together with transmission of a PRACH preamble (e.g., a Msg1 preamble or a MsgA preamble). When data related to the TA value is transmitted in addition to the PRACH preamble, signaling overhead of the UE is generated. If the PRACH preamble is transmitted such that the TA value is distinguished through a preamble index or the like, a problem of reducing PRACH capacity occurs.

As a method of not causing these problems, the BS may indicate a TA value for each RO upon providing PRACH configuration to the UE.

As a detailed configuration and indication method, the BS indicates a representative TA value and an RA offset value TA_{offset}. The representative TA value may be a minimum TA value used in a specific cell. In addition, N RO groups having a representative TA value and a total of N TA values increased in units of TA_{offset} from the representative TA value may be indicated. If the N TA values are expressed as an equation, minimum TA + (k-1) * TA_{offset}, and minimum TA + (k-1) * TA_{offset} may be referred to as a first TA value (which is distinguished from the initial TA value). K may be a natural number greater than or equal to 1 and less than or equal to N. TA_{offset} may be set to one of values capable of being indicated through a TA command field of a Msg2 (or MsgB) RAR.

The UE may select a k-th RO (group) to which the first TA value less than or equal to a TA_{AUTO} value is mapped, using TA_{AUTO}, which is acquired autonomously, and using the representative TA and TA_{offset} values indicated by the BS. The UE may transmit a PRACH preamble in the selected RO (or RO group) and, in this case, one of the following alternatives may be used as the initial TA value.
Alt 3.1-1: As the initial TA value used to transmit the PRACH preamble, the TA value TA_{AUTO} acquired by the UE is configured to be used.
Alt 3.1-2: As the initial TA value used to transmit the PRACH preamble, the first TA value mapped to the RO (or RO group) selected by the UE is configured to be used.

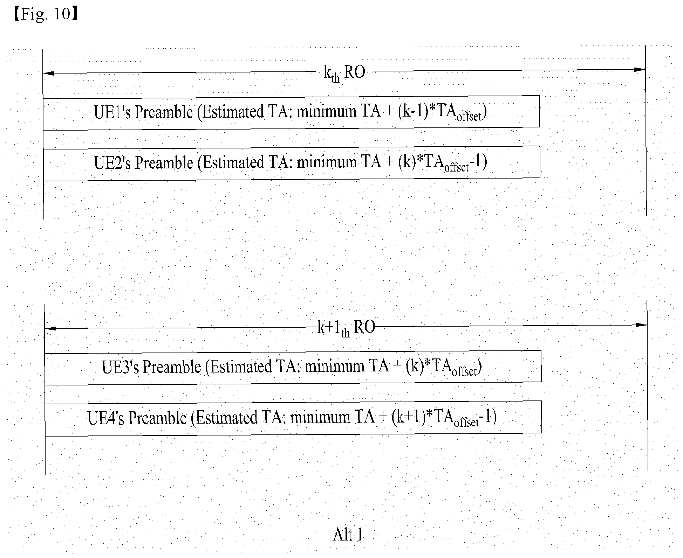

FIG. 10 illustrates the case in which the initial TA value is configured as in Alt 3.1-1. That is, each LTE transmits a PRACH preamble using the TA_{AUTO} value in an RO (or RO group) to which the autonomously obtained TA value TA_{AUTO} belongs. If it is assumed that there is no TA estimation error of the UE, PRACH preambles of a plurality of UEs that have selected a specific RO (or RO group) are always received at the same timing from the viewpoint of reception the BS.

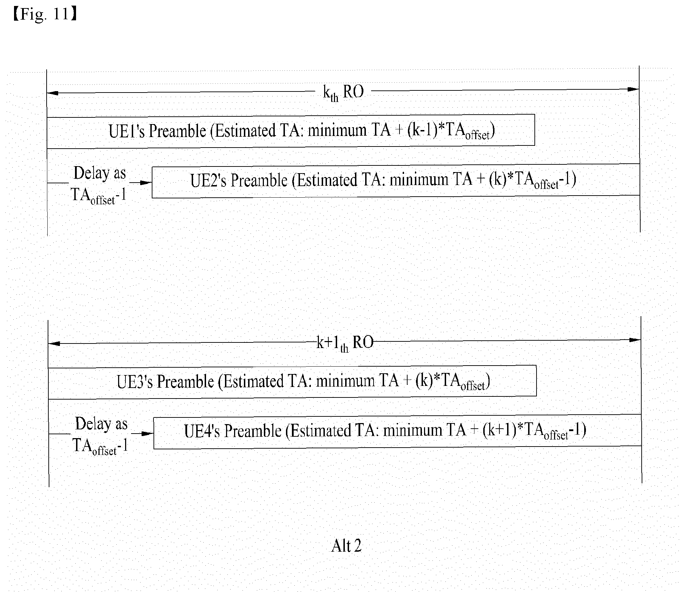

FIG. 11 illustrates the case in which the initial TA value is configured as in Alt 3.1-2. That is, each LTE transmits a PRACH preamble using the first TA value mapped to an RO (RO group) to which the autonomously obtained TA value TA_{AUTO} belongs in the RO (or RO group). If it is assumed that there is no TA estimation error of the UE, some of PRACH preambles of LTEs that have selected a specific RO (or RO group) are received with a delay relative to a right timing from the viewpoint of reception of the BS. In Alt 3.1-2, when overestimation is performed when some UEs acquire TAs, interference with other OFDM symbols located immediately before the corresponding RO may be reduced.

Additionally, upon acquiring a TA greater than a maximum TA value among first TA values configured by the BS, the UE may set the first TA value to the maximum TA value indicated by the BS and transmit a preamble in an RO corresponding to the maximum TA value. The maximum TA value may be the minimum TA + (N-1)^{∗}TA_{offset}. Even in this configuration, interference with an OFDM symbol preceding the RO due to overestimation of the UE may be reduced.

According to Section 3.1, even if the UE does not separately report a TA value, the BS may be aware of which TA value (in a range) the UE has acquired through an RO in which a PRACH preamble is transmitted. Next, the BS may adjust an exact TA value of the LTE through a subsequent RACH procedure. For example, the TA value may be adjusted using a command field of a Msg2 (or MsgB) RAR.

In Section 3.1, a different TA value (or a range of TA values) has been previously mapped to each RO, and the UE has selected an appropriate RO based on a TA value acquired thereby (e.g., a UE-specific TA). Thereafter, the BS appropriately corrects the TA value using the TA command field of the Msg2 RAR.

Meanwhile, in addition to configuring a different TA value for each RO, a different K offset (K-offset) value for each RO may be previously configured and/or indicated. For example, the BS configures and/or indicates a plurality of cell-common K offsets (to be used in an initial access procedure) through higher layer signaling (e.g., system information block type 1 (SIB1)). The plurality of K offset values may be mapped to different ROs. As an example of the mapping method, a plurality of K offset values may be sequentially mapped to ROs existing in an RACH slot configured by the BS in time domain order. Alternatively, a plurality of K offset values may be mapped to respective RO indexes through higher layer signaling.

The UE may select an RO for transmitting a Msg1 preamble based on a TA value acquired thereby (e.g., UE-specific TA). The UE may transmit the Msg1 preamble in the selected RO. Upon receiving the preamble, since the BS is aware of a K-offset value mapped to the RO selected by the UE, the BS may configure and/or indicate a parameter related to the timing of the RACH procedure (e.g., a Msg3 PUSCH and/or ACK for a Msg4 PDSCH). The LTE may perform the RACH procedure using the timing-related parameter value configured and/or indicated by the BS.

Alternatively, a plurality of beam-specific or beam-group-specific K offset values (to be used in the initial access procedure) may be indicated. The plurality of K offset values may be mapped to different ROs. The method of mapping different K offset values to respective ROs is similar to a method of mapping different K offset values to respective beams. When different beams are used for respective ROs, different K offset values for respective ROs are similar to different K offset values for respective beams. Apart from selecting the RO based on the TA value obtained by the UE, the UE may select the RO corresponding to the beam direction with the best performance upon receiving the first SSB and transmit a Msg1 preamble through the selected RO. Since the BS receiving a preamble may be aware of the K offset value mapped to the RO selected by the UE, the BS may configure and/or indicate parameters related to the timing of a subsequent RACH procedure (e.g., a Msg3 PUSCH and/or ACK for a Msg4 PDSCH). The LTE may perform the RACH procedure using the timing-related parameter value configured and/or indicated by the BS.

Even when the UE reports the TA value acquired thereby (e.g., UE-specific TA) using the Msg3 PUSCH, since the BS receiving the TA value is aware of an (optimal) K-offset value corresponding to the TA value reported by the UE, the BS may configure/indicate the timing-related parameter of a subsequent RACH procedure (e.g., ACK for the Msg4 PDSCH). The UE may perform the RACH procedure using the timing-related parameter value configured/indicated by the BS. The UE may also report information about the optimal K-offset value during reporting of the TA.

When a plurality of K offsets is not configured and one cell-specific K offset is configured, the BS may determine the (optimal) K offset value based on a TA value implicitly or explicitly reported by the UE. The BS may update, configure, and/or indicate the timing-related parameter (e.g., K-offset) of the RACH procedure (e.g., the Msg3 PUSCH and/or ACK for the Msg4 PDSCH) based on the determined value.

Meanwhile, a method of mapping a TA to each preamble and/or a method of mapping a TA to each beam may also be considered. Alternatively, a value and/or range of a scheduling parameter may be mapped to each RO, preamble, and/or beam, instead of mapping the TA to each RO, preamble, and/or beam. The scheduling parameter may include, for example, K0, K1, and/or K2, described with reference to FIGS. 4 and 5. Since the UE may expect an appropriate scheduling parameter value based on the acquired TA value, the UE may select a specific RO, preamble, and/or beam and transmit a PRACH preamble. When a different TA is configured for each RO (or RO group), an RAR monitoring timing may also be differently configured for each RO (or RO group). This may also be similarly applied to Msg3 PUSCH (or MsgA PUSCH) transmission and Msg4 (MsgB) PUCCH transmission.

Additionally, the method of mapping a TA to a specific RO (or RO group) and the method of reporting the TA value acquired by the LTE may be simultaneously applied and/or may be combined. That is, since a specific RO (or RO group) includes only a TA range, the BS divides the TA range into X TA values and indicates the TA values. The UE may report the TA value thereof to the BS by selecting one of X preamble indexes (or preamble index groups) and transmitting the PRACH preamble. In this case, the method of dividing the TA range into X durations and/or the X durations may be equal for each RO (or RO group). The BS may accurately determine the TA value acquired by the UE based on a PRACH preamble index transmitted by the UE and on an RO (or RO group).

For example, when a TA range mapped to an RO selected by the LTE is from {minimum TA + (k-1) * TA_{offset}} to {minimum TA + (k) * TA_{offset}-1}, the TA range is divided into X durations, and 64 preamble indexes are also divided into X preamble indexes or X preamble index groups. The X durations may be mapped in one-to-one correspondence to the X preamble indexes and/or the X preamble index groups. The LTE may select one preamble index among preamble indexes and preamble index groups closest to the acquired TA value and transmit the PRACH preamble to the BS. The BS may determine the TA acquired by the UE by considering the RO in which the preamble is received and the preamble index. By reporting the TA using the preamble index and the RO in combination, problems, such as difficulty in reporting an accurate TA value, because resolution is too large to report an actual TA value only with the preamble index, and reduction of PRACH capacity, may be solved.

Additionally, the UE may make a request to the BS for an appropriate scheduling parameter based on the acquired TA value. When the UE reports the TA, since the UE requests a scheduling parameter that is actually needed, instead of the BS calculating the scheduling parameter value based on the TA value, complexity of the BS may be reduced.

The methods proposed in Section 3.1 may be configured to be usable when a plurality of ROs is mapped to one SSB. For example, it may be assumed that M ROs are mapped to one SSB, and different TA values (or TA range values) are mapped to the N ROs. When M and N are equal, different TA values (or TA range values) may be mapped to M ROs mapped to one SSB.

When M and N are different, ROs may be mapped in the form of a cyclic shift (CS).

If M is greater than N, first N ROs among the M ROs mapped to one SSB may be sequentially configured to have N different TA values (or TA range values). In addition, a total of N ROs, including the remaining M-N ROs (to which the TA is not mapped) of the same period and first N-(M-N) ROs of the next period, may be sequentially configured to have N different TA values. In this way, ROs having different TAs may be repeatedly arranged.

If M is smaller than N, M ROs mapped to one SSB may be sequentially configured to have first M different TA values (or TA range values) among the N TA values. In addition, first N-M ROs among the M ROs of the next period may be sequentially configured to have the remaining N-M different TA values among the N TA values. In this way, ROs having different TAs may be repeatedly arranged.

Additionally, when a plurality of TA values is mapped to one RO, the UE that has transmitted the PRACH preamble in the RO may be configured to perform RAR monitoring based on a specific value (e.g., a minimum TA value or a maximum TA value, mapped to the RO) (actually, from a timing when the TA value is doubled) among the TA values mapped to the RO.

### 3.2. TA offset configuration method for reducing interference due to TA overestimation of LTE

When the UE transmits the PRACH preamble based on the autonomously acquired TA value, assuming that there is no TA estimation error, the PRACH preamble is received exactly in alignment with an RACH slot boundary or an RO boundary from the viewpoint of a reception timing of the BS. However, if there is an estimation error when the LTE performs TA estimation, the PRACH preamble is received before or after the RACH slot boundary or the RO boundary in terms of the reception timing of the BS. Although there is no problem when the PRACH preamble is received after the RACH slot boundary or RO boundary (underestimation), interference is applied to the last OFDM symbol of a slot immediately before an RACH slot when the PRACH preamble is received before the RACH slot boundary or RO boundary (overestimation). Alternatively, interference is applied to the PRACH preamble of another UE transmitted in a previous RO. In particular, the amount of interference increases according to the degree of overestimation.

Accordingly, a TA offset may be introduced to solve these problems. Specifically, the BS may indicate a TA offset value to the LTE through higher layer signaling (e.g., an SIB or dedicated RRC). In this case, the UE and the BS are previously aware of candidate values that may be the TA offset value, and the BS may indicate one value of the candidates as the TA offset. For example, the TA offset value may be {1/4 CP, 1/2 CP, CP, 2 CP, 4 CP} expressed as a length associated with a PRACH preamble format. As another example, the TA offset value may be {1/2 OFDM symbol, 1 OFDM symbol} expressed as a length associated with an OFDM symbol rather than the PRACH preamble format.

Additionally, the TA offset value may be independently configured for each RO (or RO group). Even if the UE has a capability of a global navigation satellite system (GNSS), the UE located indoors or in a basement may fail to obtain an accurate TA through the GNSS. In this situation, the TA obtained by the UE may have a larger error than usual. Accordingly, when it is determined that an accurate TA may not be obtained, the UE may transmit the PRACH preamble by selecting an RO having the largest TA offset value among ROs configured/indicated by the BS.

Regarding the method of Section 3.2, the operations of the LTE and the BS will now be described as follows. First, the BS may indicate the TA offset value (independently for each RO (or RO group)). Thereafter, the UE may transmit a PRACH preamble by applying an acquired TA to a TA offset value, as a target, indicated in an RO to be transmitted. Thereafter, the BS receives the PRACH preamble on the assumption that the PRACH preamble will be transmitted at the boundary of the RO. If it is assumed that there is no TA estimation error of the UE, the PRACH preamble is actually received by being delayed by the TA offset value from the boundary of the RO from the viewpoint of the reception timing of the BS.

Next, the BS may adjust the TA of the LTE using a TA command field of a Msg2 (or MsgB) RAR based on the boundary of the RO. The UE may determine that overestimation has been performed when the TA command field value of the Msg2 (or MsgB) RAR is smaller than the TA offset value configured in the RO in which the PRACH preamble has been transmitted. Conversely, the UE may determine that underestimation has been performed when the TA command field value of the Msg2 (or MsgB) RAR is larger than the TA offset value configured in the RO in which the PRACH preamble has been transmitted. Based on the corresponding information, the UE may correct a TA estimation value to reduce the estimation error before transmitting the PRACH preamble later.

According to Section 3.2, there is an advantage in that the TA offset value may be flexibly indicated (for each RO or RO group) according to the size of a cell covered by the BS or an orbit and/or altitude of a satellite.

Meanwhile, when a UE in an RRC connected mode changes a (transmission) beam in the same cell, the LTE transmits a LTL signal and/or channel, such as a PUSCH, without performing an RACH procedure. In this case, since a TA value estimated by the UE may be different for each beam, the LTE changes the beam and then immediately performs PUSCH transmission by changing the TA value (without the RACH procedure). In this case, the BS receives the PUSCH without knowing the TA value for the beam acquired by the UE, and there is a probability that the PUSCH deviates from a configured fast Fourier transform (FFT) size from the viewpoint of reception of the BS. Accordingly, when the UE independently estimates the TA for each beam, the UE may report the TA value for each beam to the BS.

Alternatively, when the LTE in an RRC connection mode changes a (transmission) beam within the same cell, the LTE may equally apply, even to the changed beam, the TA command field value of the Msg2 (or MsgB) RAR from the BS obtained through the RACH procedure while using an existing beam. The LTE additionally applies the TA command field value obtained through the existing beam to the TA value estimated for the changed beam. A value obtained by additionally applying the TA command field value to the estimated TA value may be configured and/or applied as the TA value for the changed beam when the LTE transmits a LTL signal and/or channel such as a PUSCH. If the difference in TA values between the two beams is not large, the probability of deviating from the FFT size configured by the BS may be greatly reduced when the BS receives the UL signal and/or channel through the changed beam.

Additionally, the TA offset value may be considered even in handover without the RACH procedure. The BS may indicate a TA offset value for RACH-less handover to the UE independently of a TA offset value for RACH transmission. For example, the TA offset value for RACH-less handover may be configured as half of a CP length of a (normal) PUSCH.

### 3.3 Method of estimating common TA based on position information of reference point

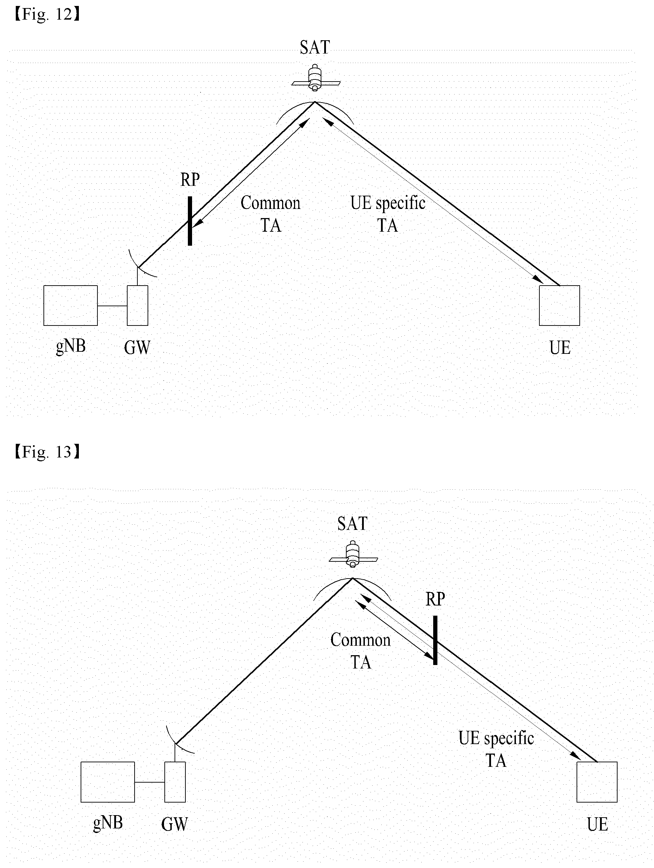

As one of the scenarios in which a current UE autonomously obtains a TA to receive an NTN service, a method in which the LTE obtains the location thereof based on a capability of a GNSS and obtains a TA value between a satellite and the UE by receiving orbit information of the satellite from a gNB is being considered. FIG. 12 illustrates an example of an NTN service. A TA value from the gNB to the satellite is referred to as a LTE-specific TA. A reference point (RP) may be an RP for UL/DL timing alignment of the UE by being located on a link (i.e., a feeder link) between a gateway (GW) connected to the gNB and the satellite or a link (i.e., a service link) between the satellite and the UE. The location of the RP may be arbitrarily determined by a network. The gNB may indicate to the UE a TA value from the RP to the satellite, which is called a common TA. According to the example of FIG. 12, the common TA has a positive value, and the UE may obtain a final TA by adding the UE-specific TA obtained autonomously to the common TA value provided from the gNB.

In this case, the gNB may indicate the common TA and/or information about the location of the RP to the LTE according to configuration/defining methods such as the following Options.

### Option 3.3-1-A) Method of indicating common TA when RP is located on feeder link

As described above, the feeder link is a wireless connection between the GW and the satellite, and the service link is a wireless connection between the UE and the satellite. If the RP is located on the feeder link, the common TA value becomes a positive number, and if the RP is located on the service link, the common TA value becomes a negative number. If the RP is located at the satellite, the common TA becomes 0. In order to reduce signaling overhead between the gNB and the UE, the RP may be configured to always be located on the feeder link.

According to Option 3.3-1-A, the gNB may indicate the TA up to the satellite based on the location of the RP as the common TA. The UE may determine a final TA by adding the UE-specific TA to the indicated common TA. Since the common TA may frequently change depending on the location of the RP and the movement of the satellite, there may be a disadvantage that the gNB should frequently indicate the common TA.

### Option 3.3-1-B) Method of indicating location information of RP instead of common TA when RP is located on feeder link

Instead of providing information about the common TA, the gNB may inform the UE of where the RP is located on the feeder link. For example, the gNB may indicate that the RP exists at the center of the feeder link. As another example, the gNB may indicate that the ratio of the distance between the RP and a ground station to the distance between the RP and the satellite is a specific ratio (e.g., 2:1, 1:2, etc.). The BS may also transmit location information of the ground station together with orbit information of the satellite. The UE may estimate a TA (i.e., the common TA in FIG. 12) from the RP to the satellite based on the orbit information of the satellite and the location information of the ground station. The gNB may indicate the location information of the ground station and location information of the RP together with orbit information of the satellite through higher layer signaling. According to Option 3.3-1-B, even if the common TA value changes as the satellite moves, since the location of the RP is fixed in a specific ratio on the feeder link, the LTE may easily estimate the common TA value. Therefore, from the viewpoint of the BS, a problem of indicating related information to the UE whenever the common TA value is changed may be solved.

According to Option 3.3-1-B, the gNB may first indicate the location information of the ground station (e.g., the GW and/or the gNB) to the LTE together with the orbit information of the satellite. Thereafter, the gNB may indicate to the UE that the RP is located at X % (or expressed as a fraction or a ratio) on the feeder link. As an example of setting X, the maximum and/or minimum value of X may be predefined between the LTE and the gNB. If X = 0 % (or X = 100 %), the RP may be defined as being present at the satellite and, if X = 50 %, the RP may be defined as being present between the satellite and the ground station. As another example, candidates that may be X may be predefined between the UE and the gNB, and the gNB may configure one of the candidates for the UE.

Thereafter, the UE may obtain the UE-specific TA using the orbit information of the satellite and the location information of the LTE and obtain the common TA using the orbit information of the satellite, the location information of the ground station, and the location information of the RP. Next, the LTE may determine a final TA by adding the LTE-specific TA to the common TA and transmit a UL signal and/or channel.

### Option 3.3-2) Method of indicating location information of RP instead of common TA when RP point is located on service link

Similar to Option 3.3-1-B, instead of providing the information about the common TA, a method in which the gNB informs the UE of where the RP is located on the service link may be considered. In this case, the UE may receive the orbit information of the satellite from the gNB and estimate a TA (i.e., the common TA) from the RP to the satellite based on the location of the UE. Next, the UE may acquire the final TA by adding the LTE-specific TA to the common TA (in this case, the common TA may be a negative number).

In this configuration, the gNB may first indicate the orbit information of the satellite to the UE. In addition, the gNB may indicate to the UE that the RP is located at X % (or expressed as a fraction or a ratio) on the service link. Similar to Option 3.3-1-B, as an example of setting X, the maximum and/or minimum value of X may be predefined between the UE and the gNB. That is, if X = 0 % (or X = 100 %), the RP may be defined as being present at the satellite and, if X = 50 %, the RP may be defined as being present between the satellite and the ground station. As another example, candidates that may be X may be predefined between the UE and the gNB, and the gNB may configure one of the candidates for the UE.

Thereafter, the UE may obtain the UE-specific TA using the orbit information of the satellite and the location information of the LTE and obtain the common TA using the orbit information of the satellite and the location information of the RP. Next, the UE may determine the final TA by adding the LTE-specific TA to the common TA and transmit a LTL signal and/or channel.

FIG. 13 illustrates the case in which an RP is located on a service link.

Two or more of Options proposed above may be used in combination. For example, a combination of 3.3-1-A and Option 2 may be applied. That is, when the RP is on the feeder link, the gNB indicates a common TA (which always has a positive value). When the RP is at the satellite and on the service link, the gNB indicates information as to where the RP is located on the service link, instead of indicating the common TA value. The advantage of this combination method is that the common TA value may always be indicated as a positive value, and the location information of the ground station does not need to be indicated.

Alternatively, a combination of Option 3.3-1-B and Option 3.3-2 may be applied. That is, regardless of the location of the RP, information about where the RP is located on the service link or on the feeder link is indicated by the gNB to the UE. Additionally, the location information of the ground station is indicated by the gNB to the UE only when the RP is located on the feeder link. The advantage of this combination method is that the gNB does not have to indicate the common TA. However, when the RP is located on the feeder link, the location information of the ground station needs to be indicated.

Additionally, the gNB may inform the UE of a time stamp for the location of the satellite instead of providing orbit information of the satellite. If this method is applied, the UE may acquire a LTE-specific TA between the satellite and the LTE through time stamp information for the location of the satellite and through time stamp information obtained through a GNSS. The UE may acquire a final TA by adding the common TA value indicated by the gNB to the UE-specific TA.

Among the proposed methods, when the gNB indicates the common TA value, there is a problem in that the common TA should be frequently indicated because the common TA may change as the location of the satellite and the location of the RP change. The UE may estimate change of the common TA value using an appropriate tracking function. However, there is a problem in that the complexity of the UE increases. Therefore, in order to solve this problem, the gNB may frequently change the location of the RP according to orbital information of the satellite so that the common TA value is fixed while providing a service using the same satellite. The gNB may indicate common TA information through higher layer signaling (e.g., an SIB or dedicated RRC), and the UE may estimate the final TA value based on a first indicated common TA value until the common TA value is newly indicated by the gNB. Then, there is an advantage in that the gNB does not need to indicate the common TA frequently, and the UE has an advantage in that a fixed common TA value may be used without the need to track change of the common TA value.

### 3.4. Method of configuring content to be used when LTE reports TA

When the UE reports a UE-specific TA value obtained autonomously (i.e., a TA value for compensating for delay between the LTE and the satellite) to the gNB through a Msg3, MsgA, and/or Msg. 5 PUSCH or reports a final TA value obtained by adding the UE-specific TA and the common TA (provided by the gNB) (i.e., TA for compensating for delay between the RP and the satellite) to the UE-specific TA to the BS through the Msg3, MsgA, and/or Msg. 5 PUSCH, the LTE may report content configured according to the following methods.

For example, since an extra space is insufficient when reporting is performed through the Msg3 PUSCH and/or MsgA PUSCH, a total bit size, a TA quantization level, a minimum/maximum value of the reported TA, and/or a quantization unit may be determined according to the altitude of the satellite and the size of a cell to which the satellite provides a service. Accordingly, the minimum and maximum values of the LTE-specific TA (or full TA) may be determined according to the altitude of the satellite and the size of the cell to which the satellite provides a service.

As a first method, the total bit size may be predefined, and the TA quantization level may be configured for the UE by the gNB through system information (or a MAC control element (CE), a (GC-)PDCCH, RRC signaling, etc.). In this case, values usable as the TA quantization level are predefined (by a table, etc.) so that the gNB may configure the TA quantization level differently according to the altitude of the satellite, the size of the cell, etc. Then, the gNB may indicate a specific value or an index of a specific set from among the predefined TA quantization level candidates.

In a second method, if the satellite is located only at a predefined altitude and the size of the cell to which a service is provided is always the same, the total bit size, the TA quantization level, the minimum/maximum value of the reported TA, and/or the quantization unit may all be predefined. In this case, the UE may determine the validity of an acquired TA by comparing the acquired UE-specific TA with the predefined maximum and/or minimum value of the TA.

As a third method, the gNB may indicate the maximum value, minimum value and/or bit size of the LTE-specific TA (or full TA) through system information (or a MAC-CE, a (GC-)PDCCH, RRC signaling, etc.). The UE may determine the quantization unit based on the indicated information and report the acquired LTE-specific TA (or full TA).

A value reported actually by the UE may be an index corresponding to the UE-specific TA (or full TA) acquired by the UE. For example, if it is assumed that the quantization level is N and the minimum TA value (indicated by the gNB) is TA_{MIN}, reporting of a specific index n (n = 0, 1, 2, ..., K-1, K = max bit width) by the UE be an operation for the UE to report a TA corresponding to TA_{MIN} + N * n.

Meanwhile, a numerology (or a subcarrier spacing) for the LTE-specific TA (or full TA) reported by the LTE may also be determined as follows.

First, the LTE may follow the numerology of an initial LTL BWP in which a signal and/or channel for which a UE-specific TA (or full TA) is reported is transmitted. Then, there is an advantage in that a numerology of the reported TA may be determined even without additional signaling by the gNB. Alternatively, a reference (or default) numerology for the UE-specific TA (or full TA) reported by the UE may be previously configured and/or defined. Alternatively, the reference (or default) numerology for the UE-specific TA reported by the UE may be configured and/or indicated through SIB/MAC-CE/PDCCH/RRC signaling of the gNB. For example, the reference numerology may be configured and/or indicated in common with a frequency region (FR). In addition, the reference numerology may be configured/indicated differently for each FR. That is, FR1 = 15 kHz, FR2 = 60 kHz, etc. may be configured and/or indicated. The UE may apply the configured and/or indicated reference numerology to the UE-specific TA (or full TA) and then report the LTE-specific TA. The LTE may apply the numerology (or unit) of a cell-specific and/or LTE-specific K offset configured and/or indicated by the gNB to the LTE-specific TA (or full TA) and report the UE-specific TA.

Additionally, the gNB may configure and/or indicate an independent numerology (based on a different reference SCS) value for each link (i.e., a service link and a feeder link) through the SIB/MAC-CE/PDCCH/RRC signaling, etc. That is, a numerology for a common TA and a common TA-related parameter may be configured and/or indicated based on a reference SCS of the feeder link, and a numerology for a UE-specific TA may be configured and/or indicated based on a reference SCS of the service link. In this case, in order for the LTE to report a final TA, recalculation may be performed so that the numerologies (or units) of the UE-specific TA and the common TA coincide. If the UE reports only the UE-specific TA, the gNB may recalculate the common TA in addition to the UE-specific TA reported by the UE to calculate an appropriate K offset value and indicate the K offset value to the UE.

Alternatively, the UE may be configured not to expect that the UE-specific TA that the UE calculates (or reports after calculation) and the common TA (and common TA parameter) configured and/or indicated by the gNB will be signaled in different numerologies. In this configuration, when the LTE reports the final TA, there is an advantage in that additional calculation is not required for the UE to match the numerology of the common TA and the numerology of the LTE-specific TA. In addition, there is an advantage that numerology configured and/or indicated to be used for the common TA and the common TA parameter may be used for the UE-specific TA.

### 3.5. Method of reporting TA during handover of UE

When a satellite to which the UE desires to perform handover is found, the UE may previously obtain a UE-specific TA for the satellite to which the UE is to move and report the UE-specific TA to a current serving gNB. In this case, the serving gNB may transfer information (e.g., a LTE ID) about the corresponding LTE to the satellite to which the LTE is to move and indicate to the LTE that the LTE should perform handover. Thereafter, when handing over to the satellite to move, the UE may skip an initial access procedure and immediately operate in connection mode.

Meanwhile, if the above operation mainly corresponds to a regenerative operation (i.e., a method in which the satellite operates as the gNB), in a transparent operation (i.e., a method in which the satellite operates in a relay scheme and the gNB is separately located on the ground), when the UE previously acquires the UE-specific TA for the satellite to which the UE is to move and reports the UE-specific TA to the current serving gNB, the gNB may previously calculate a common TA value for the satellite to which the UE is to newly move, determine a final TA (or a K-offset) together with the UE-specific TA reported by the UE, and indicate the determined final TA value to the UE through system information (or a MAC-CE). Thereafter, when handing over to the satellite to which the UE is to move, the UE may skip the initial access procedure and operate in direct connection mode. Even when the UE is handed over, if a terrestrial gNB does not change, information about the UE does not need to be transmitted. If the terrestrial gNB is changed when the UE is handed over to the satellite, the serving gNB may transmit the information about the UE (i.e., the UE ID or the UE-specific TA value reported by the UE) to a gNB to be newly changed.

Since each of the examples of the proposed methods may be included as one method for implementing the present disclosure, it is apparent that each example may be regarded as a proposed method. Although the proposed methods may be implemented independently, some of the proposed methods may be combined (or merged) for implementation. In addition, a rule may be defined such that the gNB informs the LTE of information as to whether the proposed methods are applied (or information about rules related to the proposed methods) through a predefined signal (e.g., a physical layer signal or a higher layer signal). A higher layer may include, for example, one or more of functional layers such as MAC, RLC, PDCP, RRC, and SDAP.

The methods, embodiments, or descriptions for implementing the method proposed in the present disclosure may be applied separately or in combination of one or more methods (or embodiments or descriptions).

### Implementation example

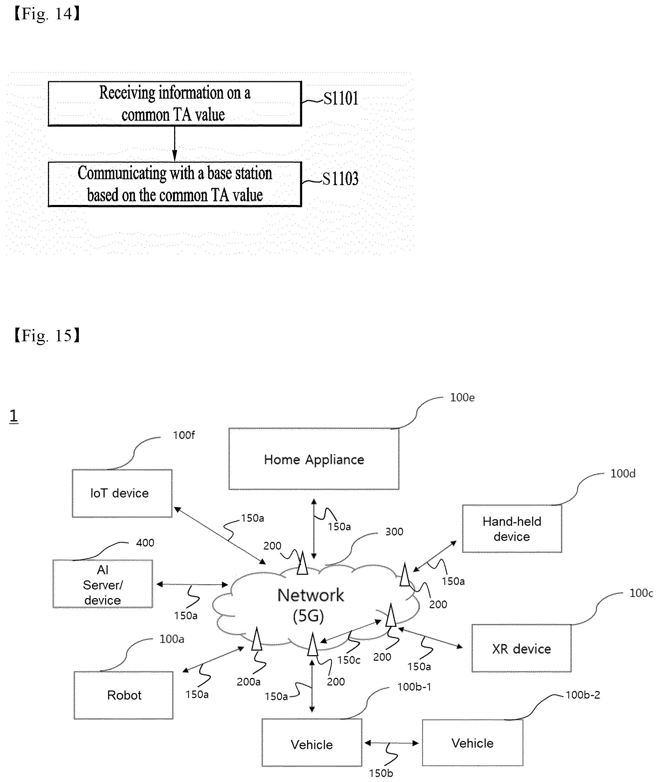

FIG. 14 is a flowchart of a signal transmission/reception method according to embodiments of the present disclosure.

Referring to FIG. 14, embodiments of the present disclosure may be performed by the LTE and include receiving information about a common TA value (S1101) and communicating with a BS based on the common TA value (S1103). Although not shown, a method performed by the BS may include transmitting information about a common TA value and communicating with the UE based on the common TA value.

The UE may acquire a TA value based on one or more of the operations described in Sections 3.1 to 3.3.

For example, the UE may acquire the information about the common TA value based on Section 3.3. An RP for determining the common TA value may be located on the feeder link as illustrated in FIG. 12 or may be located on the service link as illustrated in FIG. 13. The information about the common TA value may include the common TA value as in Option 3.3-1-A. In addition, the information about the common TA value may include information about the location of the RP on the feeder link as in Option 3.3-1-B or information about the location of the RP on the service link as in Option 3.3-2.

Referring to Option 3.3-1-B and Option 3.3-2, the information about the location of the RP may be indicated in the form of a ratio. Specifically, the information about the location of the RP may include information about the ratio of the distance from the RP to the ground station to the distance from the RP to the satellite.

As the ratio, for example, the location of the ground station may be set to 0% and the location of the satellite may be set to 100%, and the ratio may be represented in the form of % of the location of the RP between the ground station and the satellite. Alternatively, the location of the satellite may be set to 0% and the location of the ground station to 100%, and the ratio may be represented in the form of % of the location of the RP between the ground station and the satellite.

In addition, a maximum value and/or a minimum value for a range in which the RP may be located may be preset between the UE and the BS. The location of the RP may be indicated only within the preset maximum value and/or minimum value.

In addition, candidate values that may become the location of the RP may be preset between the UE and the BS. The location of the RP may be indicated as one of candidate values included in the information about the common TA. For example, the location of the RP may be indicated through the information about the ratio of the distance from the RP to the ground station to the distance from the RP to the satellite, within the information about the common TA, as one of candidate values for the ratio.

In addition, the information about the common TA value may further include orbit information of the satellite and location information of the ground station in addition to the location information of the RP.

Upon determining the common TA based on the location information of the RP, the UE may determine a final TA value by adding a UE-specific TA value to the common TA value and communicate with the BS based on the determined final TA value. For example, the UE may perform a random access procedure based on the acquired final TA value.

The UE-specific TA value may be obtained autonomously by the UE. In addition, the LTE-specific TA value may be obtained based on a combination of one or more of the operations of Section 3.1 and/or Section 3.2.

The UE may report the obtained UE-specific TA value and related information to the BS based on Section 3.4.

In addition, when performing handover to the satellite, the UE may transmit/receive information related to the TA value to/from the BS based on Section 3.5.

In addition to the operation described with reference to FIG. 14, one or more of the operations described with reference to FIGS. 1 to 13 and/or the operations described in Sections 3.1 to 3.5 may be further performed in combination.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 15 illustrates a communication system 1 applied to the present disclosure.

Referring to FIG. 15, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device

(HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

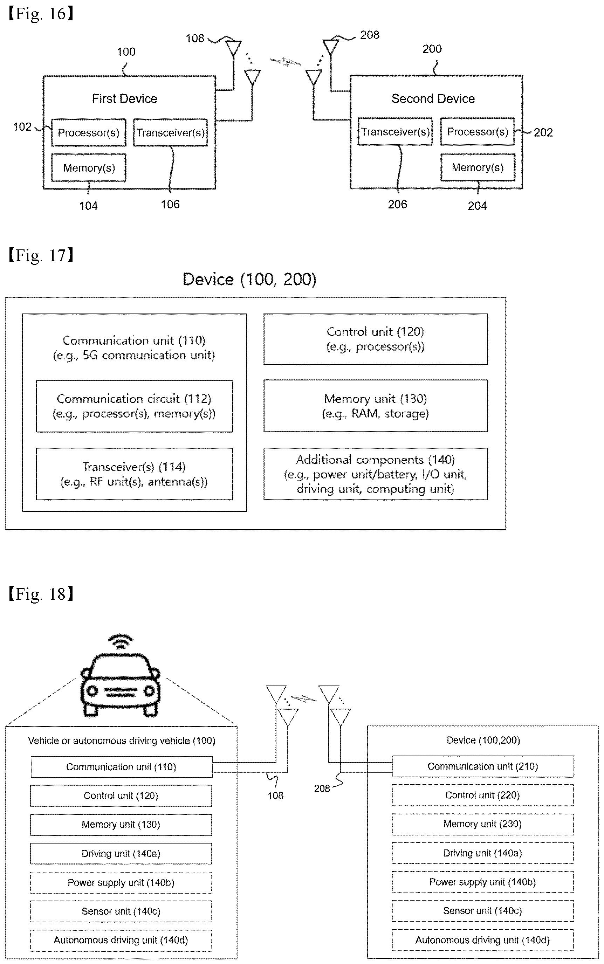

FIG. 16 illustrates wireless devices applicable to the present disclosure.

Referring to FIG. 16, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 17 illustrates another example of a wireless device applied to the present disclosure. The wireless device may be implemented in various forms according to a use case/service (refer to FIG. 15).

Referring to FIG. 17, wireless devices 100 and 200 may correspond to the wireless devices 100 and 200 of FIG. 16 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 19), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcasting terminal, a hologram device, a public safety device, an MTC device, a medical device, a FinTech device (or a finance device), a security device, a climate/environment device, the AI server/device (400 of FIG. 15), the BSs (200 of FIG. 15), a network node, or the like. The wireless device may be mobile or fixed according to a use case/service.

In FIG. 17, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 18 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### Industrial Applicability

As described above, the present disclosure is applicable to various wireless communication systems.

## Claims

1. A method of transmitting and receiving a signal by a user equipment (UE) supporting a non-terrestrial network (NTN) in a wireless communication system, the method comprising:
receiving information about a common timing advance (TA) value; and
communicating with a base station (BS) based on the common TA value,
wherein the information about the common TA value includes information about a location of a reference point on a feeder link, and
wherein the common TA value is a TA value applied between a satellite and the reference point.

2. The method of claim 1, wherein the information about the location of the reference point includes information about a ratio of a distance from the reference point to a ground station to a distance from the reference point to the satellite.

3. The method of claim 2, wherein a minimum value and a maximum value of the information about the ratio are set.

4. The method of claim 2, wherein candidate values of the ratio are preset, and one of the candidate values is indicated through the information about the ratio.

5. The method of claim 1, wherein the information about the common TA value includes orbit information of the satellite and location information of the ground station.

6. A user equipment (UE) supporting a non-terrestrial network (NTN), for transmitting and receiving a signal in a wireless communication system, the UE comprising:
at least one transceiver;
at least one processor; and
at least one memory operably connected to the at least one processor and configured to store instructions that, when executed, cause the at least one processor to perform specific operations,
wherein the specific operations comprise:
receiving information about a common timing advance (TA) value; and
communicating with a base station (BS) based on the common TA value,
wherein the information about the common TA value includes information about a location of a reference point on a feeder link, and
wherein the common TA value is a TA value applied between a satellite and the reference point.

7. The UE of claim 6, wherein the information about the location of the reference point includes information about a ratio of a distance from the reference point to a ground station to a distance from the reference point to the satellite.

8. The UE of claim 7, wherein a minimum value and a maximum value of the information about the ratio are set.

9. The UE of claim 7, wherein candidate values of the ratio are preset, and one of the candidate values is indicated through the information about the ratio.

10. The UE of claim 6, wherein the information about the common TA value includes orbit information of the satellite and location information of the ground station.

11. An apparatus for a user equipment (LTE) supporting a non-terrestrial network (NTN), the apparatus comprising:
at least one processor; and
at least one computer memory operably connected to the at least one processor and configured to cause, when executed, the at least one processor to perform operations,
wherein the operations comprise:
receiving information about a common timing advance (TA) value; and
communicating with a base station (BS) based on the common TA value,
wherein the information about the common TA value includes information about a location of a reference point on a feeder link, and
wherein the common TA value is a TA value applied between a satellite and the reference point.

12. The apparatus of claim 11, wherein the information about the location of the reference point includes information about a ratio of a distance from the reference point to a ground station to a distance from the reference point to the satellite.

13. The apparatus of claim 12, wherein a minimum value and a maximum value of the information about the ratio are set.

14. The apparatus of claim 12, wherein candidate values of the ratio are preset, and one of the candidate values is indicated through the information about the ratio.

15. The UE of claim 11, wherein the information about the common TA value includes orbit information of the satellite and location information of the ground station.

16. A computer-readable storage medium including at least one computer program supporting a non-terrestrial network (NTN), that causes at least one processor to perform operations, the operations comprising:
receiving information about a common timing advance (TA) value; and
communicating with a base station (BS) based on the common TA value,
wherein the information about the common TA value includes information about a location of a reference point on a feeder link, and
wherein the common TA value is a TA value applied between a satellite and the reference point.

17. The storage medium of claim 16, wherein the information about the location of the reference point includes information about a ratio of a distance from the reference point to a ground station to a distance from the reference point to the satellite.

18. The storage medium of claim 17, wherein a minimum value and a maximum value of the information about the ratio are set.

19. The storage medium of claim 17, wherein candidate values of the ratio are preset, and one of the candidate values is indicated through the information about the ratio.

20. The storage medium of claim 16, wherein the information about the common TA value includes orbit information of the satellite and location information of the ground station.

21. A method of transmitting and receiving a signal by a base station (BS) supporting a non-terrestrial network (NTN) in a wireless communication system, the method comprising:
transmitting information about a common timing advance (TA) value; and
communicating with a user equipment (UE) based on the common TA value,
wherein the information about the common TA value includes information about a location of a reference point on a feeder link, and
wherein the common TA value is a TA value applied between a satellite and the reference point.

22. The method of claim 21, wherein the information about the location of the reference point includes information about a ratio of a distance from the reference point to a ground station to a distance from the reference point to the satellite.

23. The method of claim 22, wherein a minimum value and a maximum value of the information about the ratio are set.

24. The method of claim 22, wherein candidate values of the ratio are preset, and one of the candidate values is indicated through the information about the ratio.

25. The method of claim 21, wherein the information about the common TA value includes orbit information of the satellite and location information of the ground station.

26. A base station (BS) supporting a non-terrestrial network (NTN), for transmitting and receiving a signal in a wireless communication system, the BS comprising:
at least one transceiver;
at least one processor; and
at least one memory operably connected to the at least one processor and configured to store instructions that, when executed, cause the at least one processor to perform specific operations,
wherein the specific operations comprise:
transmitting information about a common timing advance (TA) value; and
communicating with a user equipment (UE) based on the common TA value,
wherein the information about the common TA value includes information about a location of a reference point on a feeder link, and
wherein the common TA value is a TA value applied between a satellite and the reference point.

27. The BS of claim 26, wherein the information about the location of the reference point includes information about a ratio of a distance from the reference point to a ground station to a distance from the reference point to the satellite.

28. The BS of claim 27, wherein a minimum value and a maximum value of the information about the ratio are set.

29. The BS of claim 27, wherein candidate values of the ratio are preset, and one of the candidate values is indicated through the information about the ratio.

30. The BS of claim 26, wherein the information about the common TA value includes orbit information of the satellite and location information of the ground station.
